# EUROPEAN PATENT SPECIFICATION

(11) **EP 2 079 541 B1**
(45) Date of publication and mention of the grant of the patent: **26.02.2014**
(21) Application number: 07837555.7
(22) Date of filing: 30.08.2007
(51) Int. Cl.: B22F 3/11, B22F 7/02, B01D 39/20, B01J 35/04, B22F 5/00, C23C 18/06, B01J 23/42, B22F 5/10, C23C 24/00, C23C 24/08, H01M 4/88, H01M 4/02, H01M 4/86, B82Y 30/00, B22F 7/00

(54) **PROCESS FOR PRODUCING SINTER BONDED POROUS METALLIC COATINGS**
VERFAHREN ZUR HERSTELLUNG SINTERGEBUNDENER PORÖSER METALLÜBERZÜGE
PROCEDE POUR FABRIQUER DES REVÊTEMENTS MÉTALLIQUES POREUX LIÉS FRITTÉS

(30) Priority: 29.09.2006 US 848423 P; 13.07.2007 US 827688
(43) Date of publication of application: 22.07.2009
(73) Proprietor: Mott Corporation, Farmington CO 06032-3159 (US)
(72) Inventor: STEELE, James, K., Rockfall, CT 06481 (US); WHITE, Wayne, F., Granby, Connecticut 06035 (US); ROMANO, Alfred, M., Hartland, Connecticut 06091 (US); RUBOW, Kenneth, L., Avon, Connecticut 06001 (US)
(74) Representative: Klunker, Hans-Friedrich
(86) International application number: PCT/US2007/019102
(87) International publication number: WO 2008/042063

(56) References cited:
- GB-A- 2 183 256
- US-A- 5 080 672
- US-A- 5 531 955
- US-A1- 2002 195 188
- US-A1- 2004 168 418
- US-A1- 2006 144 770
- US-A1- 2006 147 699
- US-A1- 2006 147 699
- US-B1- 6 737 376
- US-B2- 6 358 567
- US-B2- 6 803 138

## Description

### BACKGROUND OF THE INVENTION

### 1. Field of the Invention

This invention relates to a method to form a porous metallic coating on a substrate. More particularly, a suspension of nanosize particles in a carrier fluid is deposited on the substrate and heated to evaporate the carrier fluid while sintering the particles to the substrate.

### 2. Description of the Related Art

There are numerous applications requiring a porous open cell structure including filtration and gas or liquid flow control. These structures are typically formed by compacting metallic or ceramic particles to form a green compact and then sintering to form a coherent porous structure. Particle size, compaction force, sintering time and sintering temperature all influence the pore size and the structure strength. When the pore size is relatively large, such as microsize (having an average diameter of one micron (µm) or greater), the structure thickness relative to pore size is modest for sufficient strength to be handled and utilized in industrial applications. When the pore size is relatively small, such as nanosize (having an average diameter of less than one micron), the structure thickness is much greater than pore size for sufficient strength to be handled and utilized in industrial applications. As a result, the structure has high resistance to passing a gas or liquid through the long length, small diameter pores and there is a high pressure drop across the filter. Note that for this application, the diameter is to be measured along the longest axis passing from one side of a particle to the other side and also passing through the particle center.

A number of patents disclose methods for depositing a porous coating on a substrate. U.S. Patent No. 6,544,472 discloses a method for depositing a porous surface on an orthopedic implant. Metallic particles are suspended in a carrier fluid. The carrier fluid may contain water, gelatin (as a binder) and optionally glycerin (as a viscosity enhancer). Evaporation of the water results in the metallic particles being suspended in a gelatinous binder. Heating converts the gelatin to carbon and sinters the metallic particles to the substrate.

U.S. Patent No. 6,652,804 discloses a method for the manufacture of a thin openly porous metallic film. Metal particles with an average particle diameter between one micron and 50 microns are suspended in a carrier fluid having as a primary component an alcohol, such as ethanol or isopropanol, and a binder. This suspension is applied to a substrate and heated to evaporate the alcohol component. A green film of microparticles suspended in the binder is then removed from the substrate and heated to a temperature effective to decompose the binder and sinter the metallic particles.

U.S. Patent No. 6,709,622 discloses a porous structure formed by mechanical attrition of metal or ceramic particles to nanosize and then combining the nanosized particles with a binder, such as a mixture of polyethylene and paraffin wax to form a green part. The green part is then heated to a temperature effective to decompose the binder and sinter the particles.

US 2002/0195188 A1 discloses a process for manufacturing a thin layer with open porosity. The layer is made by forming a suspension from sinterable particles, particles of a pore forming material and a binding agent, applying the suspension on a carrier body, and drying and sintering the thus formed layer.

US 2006/0147699 A1 discloses a method for forming protective coatings on a substrate. The method includes forming a slurry of filler particles and finely divided glass particles in a liquid carrier medium. The slurry is mixed in a ball mill, and after having achieved the required consistency and viscosity, sprayed onto a target substrate. The final coating is formed by sintering.

US 5 531 955 discloses coating a porous polymer sheet with a mixture of metallic particles and a binder/adhesive. The conductive coating is then overcoated by electroplating to form a conductive metal layer. The coated structure is then heated in order to burn out the porous polymer sheet and the adhesive.

GB 2 183 256 A discloses a method for forming a titanium or titanium alloy composite having a porous surface. A mixture of titanium powder, magnesium powder and a binder is applied to a titanium substrate and then heated to a temperature effective to cause sinterbonding of the powder to the substrate.

In addition to the thickness constraint discussed above, the inclusion of a binder and optional viscosity enhancer may further increase the pressure drop across a structure. During sintering, the binder and viscosity enhancer decompose, typically to carbon. This carbonatious residue may in whole or in part block a significant number of pores necessitating a high pressure drop across the structure to support adequate flow.

There remains, therefore, a need for a method to deposit a thin nano powder layer on a substrate that does not suffer from the disadvantages of the prior art.

### BRIEF SUMMARY OF THE INVENTION

In accordance with the invention, there is provided the method as defined by claim 1.

Embodiments of the method of the invention are indicated in the dependent claims.

It is a feature of certain embodiments of the invention that a thin coating of a nano powder material may be deposited onto a substrate having micropores. A first advantage of this feature is that the microporous substrate provides strength and structure support and the nano powder layer may be quite thin. As a result, a nanoporous material which has sufficient strength for handling and industrial processes is provided. Since the nano powder layer is thin, the pressure drop across the layer is substantially less than conventional thicker nano powder structures.

The details of one or more embodiments of the invention are set forth in the accompanying drawings and the description below. Other features, objects and advantages of the invention will be apparent from the description and drawings, and from the claims.

### BRIEF DESCRIPTION OF THE DRAWINGS

FIG. 1 illustrates in flow chart representation a method for depositing a porous coating in accordance with an embodiment of the invention.
FIG. 2 schematically illustrates a system for depositing the porous coating formed in accordance with an embodiment of the invention.
FIG. 3 illustrates a porous tube suitable for gas flow regulation or filtration having a porous coating formed in accordance with an embodiment of the invention.
FIG. 4 is a scanning electron micrograph of a surface of the porous coating formed in accordance with an embodiment of the invention.
FIG. 5 is a scanning electron micrograph of a cross section of the porous coating of FIG. 4.
FIG. 6 graphically illustrates the effect of successive layers of the porous coating of FIG. 4 on the gas flux.
FIG. 7 illustrates a fuel cell component having a porous coating formed in accordance with an embodiment of the invention.
FIG. 8 illustrates a frit for use in a liquid chromatography column having a porous coating formed in accordance with an embodiment of the invention.
FIG. 9 illustrates a catalytic surface suitable for an industrial catalytic converter having a porous coating formed in accordance with an embodiment of the invention.
FIG. 10 illustrates an adhesively bonded composite having a porous coating effective to enhance adhesion, the coating formed in accordance with an embodiment of the invention.

Like reference numbers and designations in the various drawings indicated like elements.

### DETAILED DESCRIPTION

For purposes of this application, a "binder" is a carrier fluid component that remains after the carrier fluid is transformed from a liquid, such as by evaporation. A "viscosity enhancer" is a liquid that when added to the carrier fluid increases the viscosity of the carrier fluid beyond that of a primary component of the carrier fluid. A "suspension" is a mixture of a powder in a solvent. A "substrate" is a device or a part of a device to which the porous metallic coatings of the invention are applied. The substrate is typically porous, but may be solid in certain embodiments. A "nano powder coating" is the porous coating applied to the substrate from a powder having an average particle size of less than 10 microns.

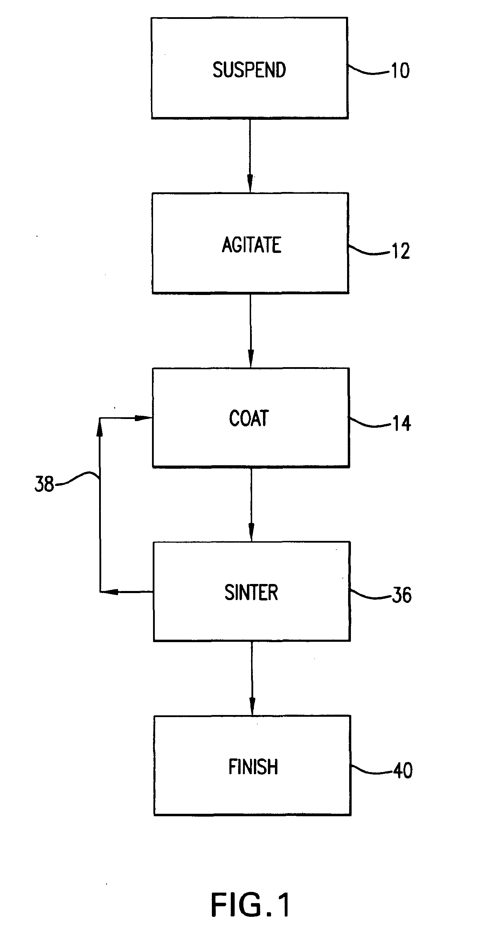

As illustrated in flowchart representation in Figure 1, the sinterable particles used to form a porous coating in accordance with the invention are suspended 10 in a carrier fluid. The sinterable particles are typically nanosize and have an average maximum diameter sufficiently small to remain in solution in the carrier fluid in the presence of agitation without requiring an addition of a binder or viscosity enhancer. The sinterable particles have an average maximum diameter of from 10 nanometers to 10 microns, and preferably have an average maximum diameter of from 10 nanometers to less than one micron. The sinterable particles are preferably metal or metal alloy powders but may also be other materials such as metal oxides and ceramics as long as such powders are capable of sinter bonding to each other and/or to a substrate. Preferred materials for the sinterable particles include nickel, cobalt, iron, copper, aluminum, palladium, titanium, platinum, silver, gold and their alloys and oxides. One particularly suitable alloy is Hastelloy C276 that has a nominal composition by weight of 15.5% chromium, 2.5% cobalt, 16.0% molybdenum, 3.7% tungsten, 15.0% iron, 1.0% manganese, 1.0% silicon, 0.03% carbon, 2.0% copper and the balance nickel.

The sinterable particles may be a mixture of materials. For example, a platinum powder may be mixed with 316L stainless steel, zinc, silver and tin powders to promote better adhesion of the coating at lower temperatures. Lower temperatures better retain the nano structure during the sintering process. The mixed coatings may be deposited from a suspension containing the mixture of powders and deposited simultaneously on to a substrate. Other benefits of applying a mixture of materials include mechanically alloying the coating, dilute and isolated particle distributions, enhanced bonding to the substrate at lower temperatures and controlled Thermal Coefficients of Expansion (TCE). Under the rule of mixtures, when 50% of component A and 50% of component B are combined and sintered, the coating would have a TCE that is the average of the respective TCE's of A and B. More than two components and other ratios of components may also be utilized and the TCE of the mixture calculated.

The carrier fluid is a liquid that evaporates essentially completely without a residue remaining dispersed in the sinterable particles. As such, the carrier fluid has less than 0.05%, by volume of binders and is free of viscosity enhancers. Preferred carrier fluids are alcohols. A most preferred alcohol for the carrier fluid is isopropanol (also referred to as isopropyl alcohol).

The suspension is formed in an inert atmosphere to prevent oxidation of the particles and because nanosized metallic particles are sometimes pyrophoric and may spontaneously ignite when exposed to air. The coating may be a mixture of different powders in which case these powders are first mixed in an inert atmosphere, such as argon. Once the powders are mixed, a carrier fluid is added to form the suspension. Nominally, equal volumes of carrier fluid and sinterable particles are utilized. However, other volume fractions may be used, dependant primarily on the method of deposition. While Brownian motion will cause the nanosized sinterable particles to remain in suspension for an extended period of time, agitation 12 is utilized to extend the period of suspension consistency. The agitation 12 may be by any effective means to maintain carrier fluid motion such as an impeller or ultrasonic vibration.

A substrate is then coated 14 with the suspension by any suitable means such as spraying, rolling, dipping, use of a doctor blade, or other method by which a thin, uniform coating thickness of about five microns maybe deposited. As described below, a sequence of coating and sintering may be repeated multiple times to achieve a desired total coating thickness. The substrate may be porous or non-porous and may have either a rough or a smooth surface finish. The substrate is formed from a material to which the sinterable particles may be sinter bonded.

One preferred substrate is a porous metal having a thickness on the order of 2.5 mm (0.1 inch) and pores with an average diameter on the order of 5µm. This substrate has sufficient strength to be handled and to withstand the rigors of an industrial process. At least one side of this substrate is coated with nanoporous particles by the method of the invention to a thickness effective to continuously coat the surface. This composite structure is effective for filtration and gas or liquid flow control on the nanoscale while having the strength and durability of a much coarser structure.

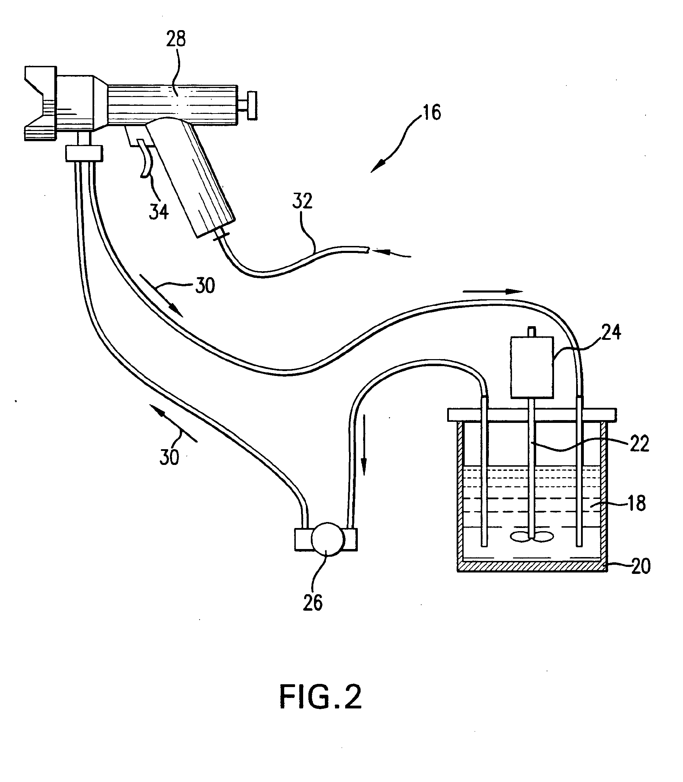

One method of the invention to deposit porous coatings utilizes the spray system 16 schematically illustrated in Figure 2. A suspension 18 of sinterable particles in a carrier fluid is retained within a pressure cup 20. An impeller 22 driven by a motor 24 or other means maintains the suspension 18 by agitation. Recirculating pump 26 draws the suspension 18 from the pressure cup 20 to a spray head 28 and returns nondeposited suspension back to pressure cup 20 in the direction generally indicated by arrows 30. The system 16 is pressurized from an external high pressure source 32 such as air pressurized to 275.8 x 10³ Pa (40 psi). A positive pressure of about 6.9 x 10³ Pa (1 psi) is maintained in pressure cup 20. Depressing trigger 34 deposits a fine spray of suspension on a substrate (not shown).

Referring back to Figure 1, following coating 14, the coated substrate is heated 36 for a time and temperature effective to evaporate the carrier fluid and sinter 36 the sinterable particles to the substrate. To prevent oxidation, sintering is typically in a neutral or reducing atmosphere or under a partial vacuum. While the sintering temperature is dependent on the composition of the substrate and sinterable particles, for iron alloy or nickel alloy components, a temperature from about 649 ° C to about 982 ° C (about 1,200 °F to about 1,800 °F), and preferably from about 760 °C to about 871°C (about 1,400° F to about 1,600°F) for a time from about 45 minutes to 4 hours, and preferably from about 1 hour to 2 hours.

Shrinkage during the sintering process may be detected if the coating step 14 deposits a suspension layer greater than about 10 microns. Preferably, the maximum coating thickness deposited during one coating cycle is on the order of five microns. If a coating thicker than 5-10 microns is desired, multiple coating cycles may be used by repeating 38 the coating and sintering steps. For smooth substrates, complete coverage can usually be achieved with a single coating and sintering cycle. When the substrate is rough and/or porous, multiple coating cycles are typically required to achieve complete coverage. When coating a Media Grade 2 porous substrate, typically three coating cycles are required to achieve complete coverage. For a Media Grade 1 substrate, two coating cycles are usually sufficient, while for a Media Grade greater than 2, several coating cycles may be required for complete coverage. A Media Grade 1 substrate is characterized by a nominal mean flow pore size of 1 µm and a Media Grade 2 substrate is characterized by a nominal mean flow pore size of 2µm. Larger pore size substrates, such as Media Grade 40 or Media Grade 100 may also be coated with the coatings described herein.

Once a coating of a desired thickness has been applied and sintered, either in one or multiple cycles, the coated surface may be finished 40 by secondary operations to cause an exterior portion of the coating to be mechanically deformed. Secondary operations include pressing, rolling, or burnishing to achieve a desired surface finish and/or finer pore size control.

While the method of the invention deposits a nano power coating from a suspension having a carrier fluid that is substantially free of a binder, it is within the scope of the invention to deposit the nano powder coating and then apply a binder as a top coat over the applied coating prior to sintering.

The invention described herein may be better understood by the examples that follow.

### EXAMPLES

### Example 1

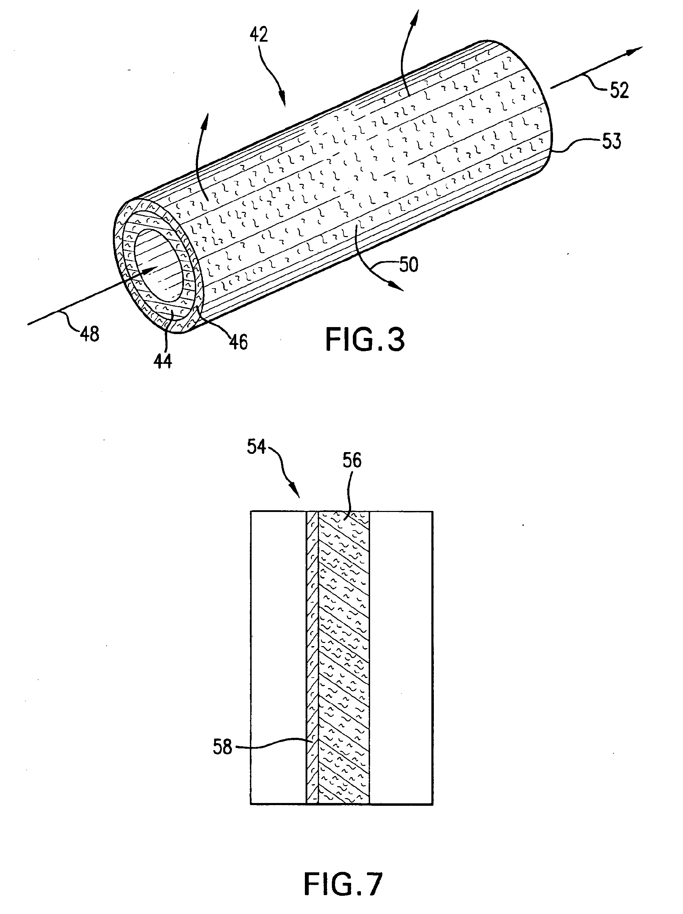

Filtration is generally performed using either cross flow or dead ended methods. In cross flow applications, only a portion of the filtrate is filtered in each pass while in dead ended applications, 100% of the fluid being filtered passes through the filter media. A process tube 42 illustrated in Figure 3 is useful for cross flow filtration and control of gas or liquid flow. The process tube 42 has a porous tubular substrate 44 with relatively large pores on the order of 5 µm. A porous coating 46 having a total coating thickness of about 25 microns and pores on the order of 50 nanometers (nm) in diameter covers the tubular substrate 44. A process gas or liquid 48 flows into the process tube 42. The filtered media 50 is sufficiently small to pass through the micropores of the porous coating 46 and exit through a wall of the process tube 42 while the waste stream 52 exits from an outlet side of the process tube. The process tube 42 depicted in Figure 3 may also be used for dead ended filtration by plugging exit end 53 of the tube, thereby forcing all of the fluid to pass through the tubular porous substrate 44 and the applied porous coating 46.

The process tube 42 was made with a tubular substrate formed from each one of 316L SS (stainless steel with a nominal composition by weight of 16-18 percent chromium, 10%-14% nickel, 2.0-3.0% molybdenum, less than 0.03% carbon and the balance iron, equally suitable is 316 SS, same composition without the restrictive limitation on carbon content), Inconel 625 (having a nominal composition by weight of 20% chromium, 3.5% niobium, and the balance nickel), and Hastelloy C276. The tubular substrate had pore sizes consistent with Media Grade 2. A slurry of Hastelloy C276 nanopowder and isopropyl alcohol was sprayed on the exterior wall of the tubular substrate to a thickness of between about 5-10 microns. The coating was sintered to the substrate by sintering at 802° C (1,475°F) for 60 minutes in a vacuum furnace. The process was repeated two additional times to achieve a total coating thickness of about 25 microns.

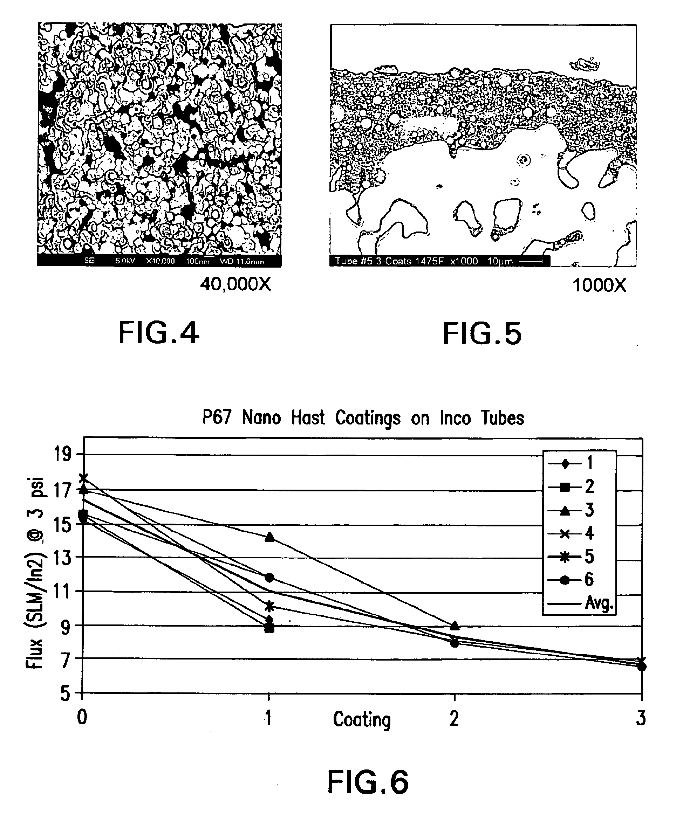

Figure 4 is a scanning electron micrograph of the nanoporous surface at a magnification of 40,000x illustrating the sintered nanoparticles and fine pores. The nanoparticles have an average diameter of about 100 nm and the nanopores have an average pore diameter of about 50 nm. Figure 5 is a scanning electron microscope at a magnification of 1,000x showing in cross-section the tubular substrate 44 and porous coating 46.

The performance of the process tube 42 was measured by determining the flux of nitrogen gas passing through the tube. The flux was measured at room temperature (nominally 22°C) with a 20.7 x 10³ Pa (3 psi) pressure drop across the tube wall. The flux units are SLM/cm² where SLM is standard liters per minute and cm² is square centimeters (SLM/in² where SLM is standard liters per minute and in² is square inches). Table 1 and Figure 6 illustrate the flux values for the process tube with from 0 to 3 nano powder coating layers. The average flux on a Media Grade 2 substrate with a total coating thickness of about 25 microns and average pore size of about 50 nm was 1.04 SLM/cm² (6.69 SLM/in²). This compares extremely favorably with a conventional Media Grade 0.5 (nominal mean flow pore size of 0.5 µm) process tube that has a flux of 0.29 SLM/ cm² at 20.7 x 10³ Pa (1.87 SLM/in² at 3 psi).

**Table 1**

| Flux at 20.7 x 10³ Pa (SLM/cm²) (3 psi (SLM/in²)) | | | | | | | |
|---|---|---|---|---|---|---|---|
| | Sample Number | | | | | | |
| Coating Layers | 1 | 2 | 3 | 4 | 5 | 6 | Average |
| 0 | (15.23) 2.36 | (15.48) 2.40 | (17.09) 2.65 | (17.28) 2.68 | (17.67) 2.74 | (15.57) 2.41 | (16.39) 2.54 |
| 1 | (9.34) 1.45 | (8.84) 1.37 | (14.38) 2.23 | (11.70) 1.81 | (10.17) 1.58 | (11.86) 1.84 | (11.05) 1.71 |
| 2 | | | (9.07) 1.41 | (8.25) 1.28 | (8.06) 1.25 | (7.93) 1.23 | (8.33) 1.29 |
| 3 | | | | | (6.81) 1.06 | (6.56) 1.02 | (6.69) 1.04 |

### Example 2

Figure 7 illustrates in cross-sectional representation a membrane 54 useful in the production of hydrogen for fuel cell applications. A microporous substrate 56 is coated with a nanocoating 58 of palladium or platinum or their alloys. The substrate pore size is on the order of from 1 to 40 microns and more preferably from 1 to 10 microns. The coating include pores with diameters of from about 50 nm to 10 microns. Subsequent layers may be deposited onto the nanocoating such as by plating or layered deposition to generate an active surface for hydrogen generation.

### Example 3

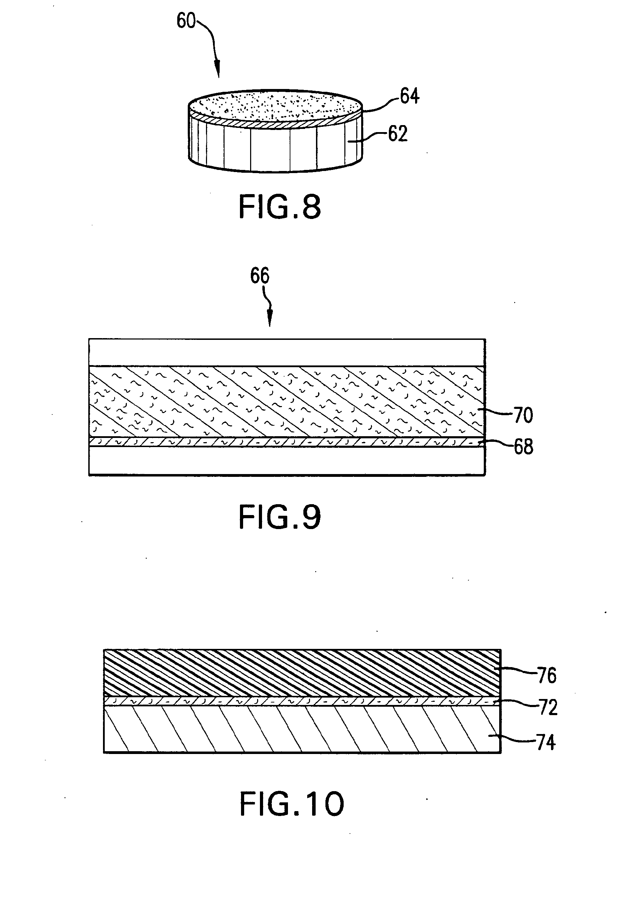

Figure 8 illustrates a particle retention barrier 60 effective to stop aluminum oxide beads from passing through a liquid chromatography column. The particle retention barrier 60 includes a microporous frit 62 that is typically formed from stainless steel, Hastelloy or titanium powders. Frit 62 has a diameter on the order of 2.08 mm (0.082 inch) (Media Grade 0.5 to 2). A nano powder layer 64, usually of the same composition as the frit, coats one side of the frit 62. The barrier 60 is formed by micropipetting or spraying a suspension of nano powder onto the surface and then vacuum sintering:

### Example 4

Figure 9 illustrates a component 66 for improved catalytic performance. A nano powder layer 68 of platinum or other catalytic material coats a surface of a metal or ceramic support 70 for use in a catalytic converter, for industrial applications and/or automotive uses.

### Example 5

Figure 10 illustrates a nano powder coating 72 applied to a surface of a substrate 74 to increase the surface area and provide locking pores for a polymer adhesive 76 thereby dramatically increasing the strength of the adhesive bond.

### Example 6

An example of creating a dilute distribution of isolated particles in a coating would be to create a 1:100 mixture of platinum particles in a stainless steel powder and then depositing this mixture onto a stainless steel substrate and sinter bonding. In this example, which would apply to a catalyst coating for fuel cell applications, one ends up with isolated platinum particles in a stainless steel surface. Here the stainless steel powder in the coating becomes indistinguishable from the substrate and the dilute platinum particles from the original coating are distributed over the surface of the substrate.

### Example 7

An example of bonding stainless steel to a substrate at lower temperatures would be to mix a lower temperature melting powder like tin with stainless steel 316 L SS powder that has a much higher melting temperature, coating the substrate with this mixture, and then follow up with sintering. The lower temperature component (tin) would diffuse at much lower temperatures than the stainless steel thus causing sintering and bonding at lower temperatures.

### Example 8

A sterilizing filter, useful to remove microbes such as bacteria and viruses from a liquid or gas medium requires a pore size of under 0.2 micron. This filter may be made by the process described herein.

### Example 9

A high efficiency filter for removing impurities from a gas or liquid medium utilizes depth filtration processes. An example of this would be to apply a relatively thick coating on the order of 200 microns on to a supporting substrate that utilizes the depth filtration technique to capture the very fine particulate/microbes for this kind of filtration. To build up this thickness, several thinner layers would be applied and sintered as described in the application to minimize shrinkage cracks during the sintering process.

One or more embodiments of the present invention have been described. Nevertheless, it will be understood that various modifications may be made without departing from the scope of the invention. Accordingly, other embodiments are within the scope of the following claims.

## Claims

1. A method for forming a porous coating on a substrate, **characterized by** the steps of:
(a) forming a suspension (10) of sinterable particles in a carrier fluid, that has less than 0.05%, by volume, of binders and is free of viscosity enhancers, said sinterable particles selected from the group consisting of metals, metal alloys, metal oxides, ceramics and mixtures thereof, and having an average maximum diameter of from 10 nanometers to 10 microns, wherein the average maximum diameter is measured along the longest axis passing from one side of a particle to the other side and also passing through the particle center;
(b) maintaining said suspension by agitating (12) said carrier fluid;
(c) drawing said suspension (10) from a pressure cup (20), applying a coating (14) of said suspension onto said substrate, and returning non-deposited suspension back to said pressure cup (20), while maintaining said agitating; and
(d) sintering (36) said sinterable particles to said substrate.

2. The method of claim 1 **characterized in that** said sinterable particles are a mixture of materials selected from the group consisting of metals, metal alloys, metal oxides, ceramics and mixtures thereof.

3. The method of either claim 1 or 2 **characterized in that** said applying (14) step applies a layer having a thickness on the order of 5 microns and both said applying (14) and said sintering (36) steps are repeated (38) at least one additional time.

4. The method of any one of claims 1 - 3 **characterized in that** said sinterable particles are selected to have an average maximum diameter of from 10 nanometers to less than 1 micron, wherein the average maximum diameter is measured along the longest axis passing from one side of a particle to the other side and also passing through the particle center.

5. The method of any one of claims 1 to 4 **characterized in that** said carrier fluid is selected to include isoprpoanol.

6. The method of any one of claims 1 to 5 **characterized by** independently selecting said sinterable particles and said substrate to be formed of nickel, cobalt,
iron, copper, aluminium, palladium, titanium, platinum, silver, gold, and mixtures thereof.

7. The method of any one of claims 1 to 6 **characterized in that** said sinterable particles are selected to have a nominal composition by weight of 15.5 % chromium, 2.5 % cobalt, 16.0 % molybdenum, 3.7 % tungsten, 15.0 % iron, 1.0 %manganese, 1.0 % silicon, 0.03 % carbon, 2.0 % copper and the balance nickel.

8. The method of any one of claims 1 to 6 **characterized in that** said sinterable particles are selected to be titanium or a titanium alloy.

9. The method of claim 7 or 8 **characterized in that** said sintering step (36) is in a reducing atmosphere at a temperature of from 1200°F (649°C) to 1800°F (982°C) for a time of from 45 minutes to 4 hours.

10. The method of any one of claims 1 to 9 **characterized in that** said substrate is selected to have a porous substrate and said porous coating provides for fluid flow or filtration.

11. The method of any one of claims 1 to 10 **characterized in that** a pore size of said porous coating is modified by secondary processing (40) following a last sintering (36) step.

12. The method of claim 11 **characterized in that** said secondary processing (40) is selected from the group consisting of pressing, rolling and burnishing.

13. The method of any one of claims 1 to 12 **characterized in that** prior to said sintering (36) steps, a binder is applied to a surface of said coating.

14. The method of any one of claims 1 to 6 **characterized in that** said sinterable particles are selected to be platinum, palladium or an alloy thereof and forms an active surface for hydrogen generation.

15. The method of any one of claims 1 to 6 **characterized in that** said sinterable particles are selected to be titanium or a titanium alloy and form a barrier effective to prevent aluminum oxide beads from passing.

## Patentansprüche

1. Verfahren zur Ausbildung einer porösen Beschichtung auf einem Substrat, **gekennzeichnet durch** folgende Schritte:
(a) Herstellen einer Suspension (10) von sinterbaren Partikeln in einem Trägerfluid, das weniger als 0,05 Volumenprozent an Bindemitteln aufweist und frei von Viskositäts-Steigerungsmitteln ist, wobei die sinterbaren Partikel ausgewählt werden aus der Gruppe, die aus Metallen, Metalllegierungen, Metalloxiden, Keramiken und Gemischen davon besteht, und einen durchschnittlichen Maximaldurchmesser von 10 Nanometern bis 10 Mikrometern haben, wobei der durchschnittliche Maximaldurchmesser entlang der längsten Achse, die von einer Seite eines Partikels zu der anderen Seite geht und auch **durch** die Partikelmitte geht, gemessen wird;
(b) Aufrechterhalten der Suspension **durch** Bewegen (12) des Trägerfluids;
(c) Saugen der Suspension (10) aus einem Druckgefäß (20), Auftragen einer Beschichtung (14) der Suspension auf das Substrat, und Zurückführen von nicht abgeschiedener Suspension zu dem Druckgefäß (20), während das Bewegen beibehalten wird; und
(d) Sintern (36) der sinterbaren Partikel an das Substrat.

2. Verfahren nach Anspruch 1, **dadurch gekennzeichnet, dass** die sinterbaren Partikel ein Gemisch von Materialien sind, die ausgewählt werden aus der Gruppe, die aus Metallen, Metalllegierungen, Metalloxiden, Keramiken und Gemischen davon besteht.

3. Verfahren nach Anspruch 1 oder 2, **dadurch gekennzeichnet, dass** der Schritt des Auftragens (14) eine Schicht mit einer Dicke in der Größenordnung von 5 Mikrometern aufträgt, und dass sowohl der Schritt des Auftragens (14) als auch der Schritt des Sinterns (36) mindestens ein zusätzliches Mal wiederholt werden (38).

4. Verfahren nach einem der Ansprüche 1 bis 3, **dadurch gekennzeichnet, dass** die sinterbaren Partikel so ausgewählt werden, dass sie einen durchschnittlichen Maximaldurchmesser von 10 Nanometern bis weniger als ein Mikrometer haben, wobei der durchschnittliche Maximaldurchmesser entlang der längsten Achse, die von einer Seite eines Partikels zu der anderen Seite geht und auch durch die Partikelmitte geht, gemessen wird.

5. Verfahren nach einem der Ansprüche 1 bis 4, **dadurch gekennzeichnet, dass** das Trägerfluid so ausgewählt wird, dass es Isopropanol umfasst.

6. Verfahren nach einem der Ansprüche 1 bis 5, **gekennzeichnet durch** unabhängig Auswählen der sinterbaren Partikel und des Substrats, dass sie von Nickel, Kobalt, Eisen, Kupfer, Aluminium, Palladium, Titan, Platin, Silber, Gold und Gemischen davon gebildet werden.

7. Verfahren nach einem der Ansprüche 1 bis 6, **dadurch gekennzeichnet, dass** die sinterbaren Partikel ausgewählt werden, dass sie eine nominelle gewichtsmäßige Zusammensetzung von 15,5 % Chrom, 2,5 % Kobalt, 16,0 % Molybdän, 3,7 % Wolfram, 15,0 % Eisen, 1,0 % Mangan, 1,0 % Silizium, 0,03% Kohlenstoff, 2,0 % Kupfer und Rest Nickel haben.

8. Verfahren nach einem der Ansprüche 1 bis 6, **dadurch gekennzeichnet, dass** die sinterbaren Partikel so ausgewählt werden, dass sie Titan oder eine Titanlegierung sind.

9. Verfahren nach Anspruch 7 oder 8, **dadurch gekennzeichnet, dass** der Schritt des Sinterns (36) in einer reduzierenden Atmosphäre bei einer Temperatur von 1200°F (649°C) bis 1800°F (982°C) für eine Zeit von 45 Minuten bis 4 Stunden stattfindet.

10. Verfahren nach einem der Ansprüche 1 bis 9, **dadurch gekennzeichnet, dass** das Substrat so ausgewählt wird, dass es ein poröses Substrat hat und die poröse Beschichtung eine Strömung oder Filtration von Fluid unterstützt.

11. Verfahren nach einem der Ansprüche 1 bis 10, **dadurch gekennzeichnet, dass** eine Porengröße der porösen Beschichtung durch eine Sekundärbehandlung (40) nach dem letzten Sinterschritt (36) modifiziert wird.

12. Verfahren nach Anspruch 11, **dadurch gekennzeichnet, dass** die Sekundärbehandlung (40) ausgewählt wird aus der Gruppe, die aus Pressen, Walzen und Polieren besteht.

13. Verfahren nach einem der Ansprüche 1 bis 12, **dadurch gekennzeichnet, dass** vor den Sinterschritten (36) ein Bindemittel auf eine Oberfläche der Beschichtung aufgetragen wird.

14. Verfahren nach einem der Ansprüche 1 bis 6, **dadurch gekennzeichnet, dass** die sinterbaren Partikel so ausgewählt werden, dass sie Platin, Palladium oder eine Legierung davon sind und eine aktive Oberfläche zur Erzeugung von Wasserstoff bilden.

15. Verfahren nach einem der Ansprüche 1 bis 6, **dadurch gekennzeichnet, dass** die sinterbaren Partikel so ausgewählt werden, dass sie Titan oder eine Titanlegierung sind und eine Barriere bilden, die wirksam ist, Alumiumoxid-Kügelchen daran zu hindern, hindurch zu gehen.

## Revendications

1. Procédé de formation d'un revêtement poreux sur un substrat, **caractérisé par** les étapes de :
(a) formation d'une suspension (10) de particules frittables dans un fluide porteur, qui contient moins de 0,05 % en volume de liants et qui est dépourvu de rehausseurs de viscosité, lesdites particules frittables étant sélectionnées dans le groupe constitué des métaux, des alliages de métaux, des oxydes de métaux, des céramiques et des mélanges de ceux-ci, et ayant un diamètre moyen maximal de 10 nanomètres à 10 microns, dans lequel le diamètre moyen maximal est mesuré le long de l'axe le plus long passant d'un côté à l'autre d'une particule et traversant également le centre de la particule ;
(b) maintien de ladite suspension par agitation (12) dudit fluide porteur ;
(c) retrait de ladite suspension (10) d'une coupelle sous pression (20), application d'un revêtement (14) de ladite suspension sur ledit substrat et renvoi de la suspension non déposée dans ladite coupelle sous pression (20), tout en maintenant ladite agitation ; et
(d) frittage (36) desdites particules frittables sur ledit substrat.

2. Procédé selon la revendication 1, **caractérisé en ce que** lesdites particules frittables sont un mélange de matériaux sélectionnés dans le groupe constitué des métaux, des alliages de métaux, des oxydes de métaux, des céramiques et des mélanges de ceux-ci.

3. Procédé selon l'une quelconque des revendications 1 ou 2, **caractérisé en ce que** ladite étape d'application (14) applique une couche ayant une épaisseur de l'ordre de 5 microns et les étapes aussi bien d'application (14) que de frittage (36) sont répétées au moins une fois de plus.

4. Procédé selon l'une quelconque des revendications 1 à 3, **caractérisé en ce que** lesdites particules frittables sont sélectionnées de façon à avoir un diamètre moyen maximal de 10 nanomètres à moins de 1 micron, dans lequel le diamètre moyen maximal est mesuré le long de l'axe le plus long passant d'un côté à l'autre d'une particule et traversant également le centre de la particule.

5. Procédé selon l'une quelconque des revendications 1 à 4, **caractérisé en ce que** ledit fluide porteur est sélectionné de façon à comprendre de l'isopropanol.

6. Procédé selon l'une quelconque des revendications 1 à 5, **caractérisé par** la sélection indépendante desdites particules frittables et dudit substrat de façon à être formés de nickel, de cobalt, de fer, de cuivre, d'aluminium, de palladium, de titane, de platine, d'argent, d'or et de mélanges de ceux-ci.

7. Procédé selon l'une quelconque des revendications 1 à 6, **caractérisé en ce que** lesdites particules frittables sont sélectionnées de façon à avoir une composition nominale en poids de 15,5 % de chrome, de 2,5 % de cobalt, de 16,0 % de molybdène, de 3,7 % de tungstène, de 15,0 % de fer, de 1,0 % de manganèse, de 1,0 % de silicium, de 0,03 % de carbone, de 2,0 % de cuivre et le complément de nickel.

8. Procédé selon l'une quelconque des revendications 1 à 6, **caractérisé en ce que** lesdites particules frittables sont sélectionnées de façon être du titane ou un alliage de titane.

9. Procédé selon la revendication 7 ou 8, **caractérisé en ce que** ladite étape de frittage (36) est réalisée dans une atmosphère réductrice à une température de 1200°F (649°C) à 1800°F (982°C) pendant un temps de 45 minutes à 4 heures.

10. Procédé selon l'une quelconque des revendications 1 à 9, **caractérisé en ce que** ledit substrat est sélectionné de façon à comprendre un substrat poreux et ledit revêtement poreux fournit un écoulement ou une filtration d'un fluide.

11. Procédé selon l'une quelconque des revendications 1 à 10, **caractérisé en ce que** la taille de pores dudit revêtement poreux est modifiée par un traitement secondaire (40) après la dernière étape de frittage (36).

12. Procédé selon la revendication 11, **caractérisé en ce que** ledit traitement secondaire (40) est sélectionné dans le groupe constitué de la compression, du laminage et du brunissage.

13. Procédé selon l'une quelconque des revendications 1 à 12, **caractérisé en ce qu'**avant lesdites étapes de frittage (36), un liant est appliqué sur une surface dudit revêtement.

14. Procédé selon l'une quelconque des revendications 1 à 6, **caractérisé en ce que** lesdites particules frittables sont sélectionnées de façon à être du platine, du palladium ou un alliage de ceux-ci et forment une surface active pour la production d'hydrogène.

15. Procédé selon l'une quelconque des revendications 1 à 6, **caractérisé en ce que** lesdites particules frittables sont sélectionnées de façon à être du titane ou un alliage de titane et forment une barrière efficace pour empêcher à des billes d'oxyde d'aluminium de la traverser.
